# EUROPÄISCHE PATENTANMELDUNG

(11) **EP 2 684 495 A1**
(43) Veröffentlichungstag der Anmeldung: **15.01.2014**
(21) Anmeldenummer: 13187509.8
(22) Anmeldetag: 12.08.2010
(51) Int. Cl.: A47J 27/58, A47J 36/06

(54) **Kochgefäßaufsatz zum Verhüten des Überkochens von Flüssigkeiten**

(30) Priorität: 17.09.2009 DE 102009041866
(62) Teilanmeldung aus: 12184891.5
(71) Anmelder: Harecker, Armin, 84424 Isen (DE)
(72) Erfinder: Harecker, Armin, 84424 Isen (DE)
(74) Vertreter: HOFFMANN EITLE

(57) **Zusammenfassung**

Es wird offenbart ein Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der mindestens eine Durchtrittsöffnung (2) für die Flüssigkeit aufweist, wobei der Durchtrittsöffnung (2) bzw. den Durchtrittsöffnungen ein flächiges Verschlussteil (6) zugeordnet ist, das mit dem Kochgefäßaufsatz (1) verbunden ist, und das in dem nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind, und so gestaltet und mit dem Kochgefäßaufsatz (1) verbunden ist, dass es der Öffnungsbewegung einen geringen Widerstand entgegensetzt, wobei der Kochgefäßaufsatz (1) auf Kochgefäße mit unterschiedlichen Durchmessern aufsetzbar ist, zumindest die Kontaktflächen (11) des Kochgefäßaufsatzes (1) zu den unterschiedlichen Kochgefäßen (7) aus einem elastischen Material, insbesondere aus Silikon, gebildet sind, und das Verschlussteil (6) bevorzugt tellerartig ausgebildet ist, dadurch gekennzeichnet, dass der Kochgefäßaufsatz (1) schalenförmig ausgebildet ist, sodass die hochkochende Flüssigkeit durch die geöffnete Druchtrittsöffnung (2) bzw. durch die geöffneten Druchtrittsöffnungen (2) in die Schale gelangen kann und von dort durch die geöffnete Durchtrittsöffnung (2) bzw. die geöffneten Durchtrittsöffnungen (2) wieder in das Kochgefäß (7) zurücklaufen kann.

## Beschreibung

Die Erfindung betrifft einen Kochgefäßaufsatz nach dem Oberbegriff des Patentanspruchs 1. Der Kochgefäßaufsatz dieser Art ist Gemäß dem DE-GM 8713234 Kochgefäßschalenförmig ausgebildet und kann auf Kochgefäße mit unterschiedlichen Durchmessern aufgelegt werden. Ein Überkochen der Kochflüssigkeit wird dadurch verhindert, dass der Kochgefäßaufsatz zumindest einen relativ großen Durchtrittsöffnungsquerschnitt für die aufschäumende Kochflüssigkeit aufweist. Die Durchtrittsöffnungen sind derart ausgerichtet und ausgebildet ist, dass die Kochflüssigkeit in eine Drehbewegung versetzt wird und somit ein schnelleres Abkühlen der Kochflüssigkeit erreicht wird. Dann fließt die abgekühlte Kochflüssigkeit wieder in das Kochgefäß zurück.

Um ein Anheben des gesamten, offensichtlich aus Metall gebildeten Kochgefäßaufsatzes beim plötzlichen und kraftvollen Hochkochen von Kochflüssigkeiten wie bspw. Milch zu vermeiden, muss der freie Öffnungsquerschnitt der Durchtrittsöffnung bzw. der Durchtrittsöffnungen selbst bei hohem Gewicht des Aufsatzes sehr groß sein. Je grösser der Querschnitt der Durchtrittsöffnungen ist, desto zuverlässiger funktioniert der Kochgefäßaufsatz. Durch diese große Durchtrittsöffnung entweicht jedoch nutzlos ein hoher Anteil an Heizenergie während des gesamten Kochvorganges. Weiter führen schon geringste Unebenheiten am oberen Auflagerand des Kochgefäßes oder ein nicht exakt in einer Ebene liegender Auflagerand des Kochgefäßes zum Flüssigkeits- bzw. Schaumaustritt zwischen dem Kochgefäß und dem Kochgefäßaufsatz.

Der Erfindung liegt daher die Aufgabe zugrunde, einen Kochgefäßaufsatz der eingangs genannten Art zu schaffen, der noch zuverlässiger den Austritt von hochkochender bzw. hochschäumender Flüssigkeit bei unterschiedlichen Kochgefäßen verhindert und dabei einen energiesparenden Kochvorgang gewährleistet.

Dies wird bei einem Kochgefäßaufsatz nach dem Oberbegriff des Anspruchs 1 dadurch erreicht, dass das zumindest die Kontaktflächen des Kochgefäßaufsatzes zu den unterschiedlichen Kochgefäßen aus einem elastischen Material, insbesondere aus Silikon gebildet sind, dass der Durchtrittsöffnung bzw. den Durchtrittsöffnungen mindestens ein flächiges Verschlussteil zugeordnet ist, das mit dem Kochgefäßaufsatz verbunden ist, im nicht durch die hochkochende bzw. hochschäumende Flüssigkeit in Kontakt stehenden Ruhezustand die ihm zugeordnete Durchtrittsöffnung bzw. die ihm zugeordneten Durchtrittsöffnungen im Wesentlichen verschließt und durch die Beaufschlagung mit der beim Kontakt mit der hochkochenden bzw. hochschäumenden Flüssigkeit entstehenden Öffnungskraft in eine Öffnungsstellung bewegbar ist, in der die Durchtrittsöffnung bzw. Durchtrittsöffnungen zumindest teilweise freigegeben sind, und so gestaltet und mit dem Kochgefäßaufsatz verbunden ist, dass es einen geringen Widerstand der Öffnungsbewegung entgegensetzt.

Während des Kochvorganges ist die Durchtrittsöffnung bzw. sind die Durchtrittsöffnungen geschlossen, womit der Kochgefäßaufsatz wie ein geschlossener, energiesparender Deckel wirkt. Exakt beim Hochkochen der Flüssigkeit, also wenn die hochkochende Flüssigkeit in Kontakt mit dem Verschlussteil gelangt, entfaltet der Kochgefäßaufsatz seine Funktion als Überkochverhinderer, indem die hochkochende Flüssigkeit bzw. der hochkochende Schaum das jeweilige Verschlussteil in die Öffnungsstellung drückt. Dies erfolgt rasch und unter Überwindung des der Öffnungsbewegung entgegenstehenden Widerstandes des flächigen Verschlussteils.

Leicht erkennbar entspricht dieser Widerstand vorrangig der Eigengewichtskomponente und zweitrangig noch einer möglichen Verformungskomponente des Verschlussteils. Ebenso ist somit erkennbar, dass das Verschlussteil möglichst geringgewichtig sein muss und leichtbeweglich verbunden sein muss um ein schnelles und zuverlässiges Öffnen und Schließen des Verschlussteils zu gewährleisten.

Durch die geöffnete Durchtrittsöffnung gelangt somit die hochkochende Flüssigkeit in die Schale, wo ein Energieabbau sowie eine Abkühlung der hochkochenden Flüssigkeit und deren Rückfluss durch die geöffnete Durchtrittsöffnung erfolgen.

Beim erfindungsgemäßen Kochgefäßaufsatz geht also bis zum Erreichen des Siedepunktes der Kochflüssigkeit keine Heizenergie verloren. Erst beim gefährlichen Hochkochen der Flüssigkeit öffnet sich das Verschlussteil entgegen der genannten Widerstandskraft durch die Kraftbeaufschlagung der hochkochenden Flüssigkeit. Durch die flächige, geringgewichtige und mit dem Kochgefäßaufsatz leichtbeweglich verbundene Verschlussteilkonstruktion wird erreicht, dass deren Öffnungswiderstand sehr gering ist und damit auch schon eine geringe, nach oben gerichtete Kraftkomponente der aufkochenden bzw. aufschäumenden Kochflüssigkeit das Verschlussteil in die Öffnungsstellung bringt.

Bedeutend ist hierbei, dass sich das Verschlussteil selbsttätig nur so weit wie nötig öffnet. Je höher der von unten ausgeübte Druck ist, je weiter öffnet das Verschlussteil die Durchtrittsöffnung. Die Durchtrittsöffnungen selbst kann also ohne Energieverlust zu verursachen relativ groß gewählt werden. Damit zusammenhängend kann auch das Gesamtgewicht des Kochgefäßaufsatzes dank der sensibel reagierenden Verschlussteile deutlich reduziert werden, da sich dieses Gesamtgewicht nicht gegen eine feste Kraftkomponente der aufkochenden bzw. aufschäumenden Kochflüssigkeit stemmen muss. Vielmehr bestimmt die aufkochende Flüssigkeit selbst, wie weit das Verschlussteil geöffnet wird, bzw. welcher Öffnungsquerschnitt frei gegeben wird.

Die Öffnungsweite des Verschlussteils ändert sich ständig während des Aufkochvorganges als Reaktion auf die dort gerade wirkende Kraft der aufkochenden bzw. aufschäumenden Flüssigkeit. Diese Änderung der Öffnungsweite, die bis zu einem Flattern der Verschlussteils führen kann, hat den Effekt, dass die Oberflächenspannung der aufschäumenden bzw. hochkochenden Flüssigkeit reduziert wird und damit ein Abbau der nach oben drückenden Kraftkomponente der Flüssigkeit während des Hochkochens erfolgt.

Dabei genügt eine zentrale Durchtrittsöffnung. Es können jedoch auch mehrere Durchtrittsöffnungen vorgesehen sein. Sie müssen nur innerhalb der Öffnungsweite des kleinsten verwendeten Kochgefäßes liegen, die üblicherweise 14 cm beträgt. Diese zentrale Durchtrittsöffnung oder die mehreren Durchtrittsöffnungen können sowohl von nur einem einzigen Verschlussteil oder mehreren Verschlussteilen verschlossen bzw. geöffnet werden.

Um den Kochgefäßaufsatz für Kochgefäße mit unterschiedlichen Innendurchmessern, z.B. von 14 cm bis 24 cm, und unterschiedlichen Oberrandausbildungen verwenden zu können sieht die Erfindung zumindest an den Kontaktflächen des Kochgefäßaufsatzes zu den unterschiedlichen Kochgefäßen, beispielsweise in den Ringbereichen von 14 cm, 16 cm, 18 cm, 20 cm, 22 cm, und 24 cm, ein elastisches Material, insbesondere Silikon vor. Damit ist auch gewährleistet, dass es zu keinem Flüssigkeits- oder Schaumaustritt zwischen dem Kochgefäßaufsatz und den unterschiedlichen Kochgefäßen kommt.

Die Ausbildungen des Kochgefäßaufsatzes nach dem Anspruch 1 gewährleisten eine höhere Funktionssicherheit, gewährleistet die Verwendbarkeit bei einem größeren Spektrum an unterschiedlichen Kochgefäßen und bewirkt, dass keine unnötige Energie während es Kochvorganges verloren geht.

Vorteilhafte Ausgestaltungen des Kochgefäßaufsatzes nach dem Hauptanspruch sind in den Unteransprüchen angegeben. Bei der Ausbildung nach den Ansprüchen 2 und 3 sind die Durchtrittsöffnungen in einem Kreisringbereich angeordnet. Dies führt zu einer symmetrischen Belastung des Kochgefäßaufsatzes während des Hochkochens der Flüssigkeit und zu einer einfachen Verschlussteilgestaltung. Hier bietet sich beispielsweise ein zentral mit dem Kochgefäßaufsatz verbundenes, tellerartiges Verschlussteil an, das auch in einzelne blütenblätterähnliche Einzelverschlussteile aufgefächert sein kann. Alternativ ist jeder Durchtrittsöffnung ein Verschlussteil zugeordnet.

Eine Ausbildung mit einer zentralen Durchtrittsöffnung oder gemäß Absatz 4 am Ende der Beschreibung ist besonders leicht herstellbar. Sie eignet sich besonders für den Fall, dass der Hauptschalenkörper aus Glas oder Metall gebildet wird. Beispielsweise wäre hier ein Verschlussteller angezeigt, der neben der Durchtrittsöffnung an dem Kochgefäßaufsatz an zwei gegenüberliegenden Punkten befestigt ist und mit beiden Hälften nach oben klappen kann. Es sind jedoch hier, ebenso wie bei den anderen Anordnungen der Durchtrittsöffnungen, viele Möglichkeiten der Verschlussteilausbildung gegeben, soweit sie die im Anspruch 1 genannten Bedingungen erfüllen. Es ist auch ein flächiges Verschlussteil denkbar, das mit dem Kochgefäßaufsatz so verbunden ist, dass es eine geführte, insbesondere vertikale Bewegung ausführen kann.

Die Absätze 8 bis 12, 16, 18 und 19 am Ende der Beschreibung betreffen besonders geeignete Ausbildungen der Verschlussteile bzw. deren Zuordnung zu den Durchtrittsöffnungen. Grundsätzlich können die Verschlussteile so mit dem Kochgefäßaufsatz verbunden sein, dass sie sich radial nach außen oder innen, oder tangential oder zu jeder beliebigen Zwischenrichtung hin öffnen.

Bevorzugt ist das Verschlussteil zumindest bereichsweise aus elastischem Material hergestellt. Damit lässt sich gut das Bewegungsverhalten des Verschlussteils bestimmen. Ein elastischer Bereich kann beispielsweise ein elastisches Gelenk bilden, das auch als Filmscharnier ausgebildet sein kann.

Die Ausgestaltungen nach den Absätzen 10, 11 und 18 am Ende der Beschreibung ermöglichen eine feine Abstimmung des Verschlussteils in Hinblick auf dessen Öffnungswiderstandes bzw. dessen Beweglichkeit und Sensibilität für die Bewegungen. Mit der Ausbildung, bei der die Dicke des Verschlussteils bevorzugt zu seinen freien, nicht mit dem Kochgefäßaufsatz verbundenen Rändern hin abnimmt wird erreicht, dass sich benachbarte Verschlussteile bei Ihrem Bewegungsweg zwischen der Ruhe- und Öffnungsstellung nicht gegenseitig Verklemmen sondern übereinander gleitbar sind. Die Absätze 12 und 19 am Ende der Beschreibung betreffen bevorzugte Ausbildungen des Verschlussteils, die sich u.a. gut zur Verwendung bei der Kochgefäßaufsatzgestaltung nach dem Absatz 14 am Ende der Beschreibung eignen. Die Verschlussteile lassen sich einfach im Zentralbereich mit dem Kochgefäßaufsatz verbinden. Damit muss sich der anschließende Verschlussteilring oder die anschließenden Einzelverschlussteile (vgl. Absatz 19 am Ende der Beschreibung) lediglich um sehr kleine, am Zentralbereich Verbindungslinien verformen, wobei der Zentralbereichrand vorzugsweise als Polygonring ausgebildet ist.

Im Absatz 20 am Ende der Beschreibung sind Mittel angegeben, mit denen die Steifigkeit des Kochgefäßaufsatzes beeinflussbar ist, dessen zentrische Platzierung auf das Kochgefäß erleichtert werden kann und bestimmte Stellen markiert werden können.

Bei der Ausbildung des Kochgefäßaufsatzes gemäß Absatz 14 am Ende der Beschreibung ist eine besondere Formgebung gewählt. Folgt das Verschlussteil dieser Formgebung, was gemäß Absatz 17 am Ende der Beschreibung empfohlen wird, so spricht dieses besonders leicht und feinfühlig auf die hochkochende Flüssigkeit an. Da der äußere Verschlussteilbereich nach einer Richtungsumkehr in den schräg nach außen und unten geneigten Randabschnitt übergeht, fängt sich die hochkochende Flüssigkeit am äußeren Verschlussteilbereich und wirkt auf einer großen Angriffsfläche und mit einem großen Hebelarm am Verschlussteil.

Der Kochgefäßaufsatz kann auch mit Metalleinsätzen oder -ringen versehen sein. Insbesondere wenn dieser aus Silikon gefertigt ist, wirkt sich dies auf sein Gewicht und seine Steifigkeit aus. Bevorzugt sind die Einsätze oder Ringe von Silikon umschlossen. Weiter lassen sich zusätzliche Kräfte auf den Kochgefäßaufsatz ausüben, wenn ein Permanentmagnet in seine Nähe gebracht wird. Es können auch leicht magnetische Zusatzgewichte oder Griffe angesetzt werden. Falls letzteres nicht erwünscht ist, kann die Steifigkeit auch durch z. B. härtere Kunststoffeinsätze oder-ringe beeinflusst werden.

Ist der Kochgefäßaufsatz, wie bevorzugt, gänzlich aus Silikon, so ist er besonders flexibel und gut an jegliche Ränder von Kochgefäßen anpassbar. Er lässt sich sogar, insbesondere durch Aufsetzen eines Zusatzgewichtes bei Kochgefäßen mit Ausgießschnäbeln verwenden. Soll der Kochgefäßaufsatz für Kochgefäße mit sehr großen Innendurchmessern verwendet werden, z.B. 28 cm oder mehr, so empfiehlt es sich einen einfach gestalteten Adapterring zu verwenden. Auf die Herstellung und Vorhaltung verschiedener Größen des komplizierter gestalteten Kochgefäßaufsatzes kann damit verzichtet werden.

Nachfolgend wird ein Ausführungsbeispiel des Kochgefäßaufsatzes gemäß der Erfindung anhand der Zeichnung beschrieben. Es zeigt:
- Fig. 1:: einen Kochgefäßaufsatz mit geöffneten Verschlussteilen auf einem Kochgefäß, wobei zur besseren Darstellung ein Viertel herausgeschnitten ist.
- Fig. 2:: einen Querschnitt durch ein Hälfte des Kochgefäßaufsatzes gemäß der Schnittführung B in Fig. 1.
- Fig. 3:: eine weitere Ausgestaltung eines Kochgefäßaufsatzes mit geöffneten Verschlussteilen auf einem Kochgefäß, wobei auch hier zur besseren Darstellung ein Viertel herausgeschnitten ist.

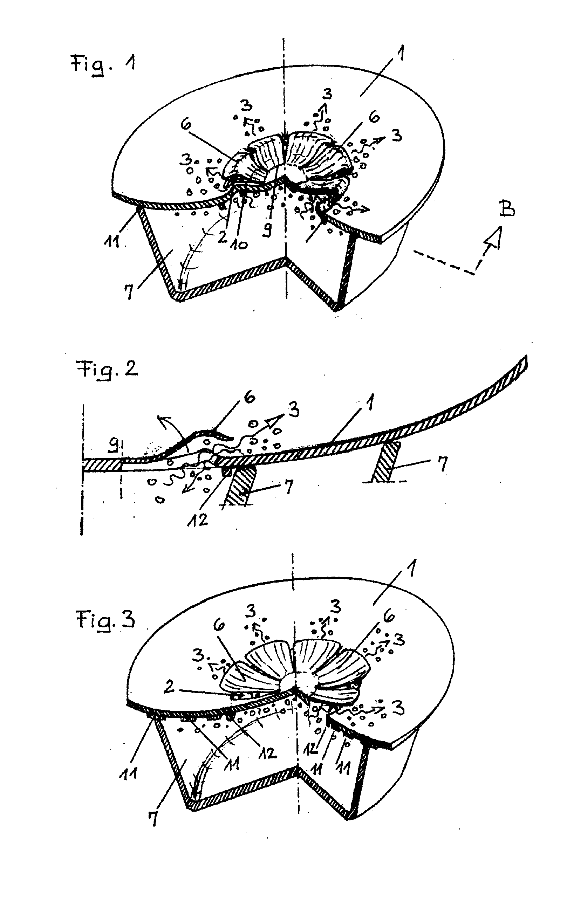

Der in Fig. 1 und 2 gezeigte, auf einem Kochtopf aufgelegte Kochgefäßaufsatz 1 ist vollständig aus Silikon gebildet und weist einen horizontalen, scheibenförmigen Zentralbereich auf, der von sechs Polygonseiten begrenzt ist. Daran schließen sich nach außen innerhalb eines Kreisringes gleichmäßig verteilt sechs Durchtrittsöffnungen (2) an, zwischen denen jeweils ein Verbindungssteg (10) vorhanden ist. Die Durchtrittsöffnungen (2) haben im Wesentlichen einen tortenstückähnlichen Grundriss mit einer abgeschnitten Spitze. Außerhalb dieser, die abgeschnittene Spitze bildenden Linie (9), die sich als regelmäßiges Sechseck an den genannten Zentralbereich anschließt, sind die Verschlussteile (6) nicht mehr mit dem Kochgefäßaufsatz verbunden und bilden somit einzelne Verschlussteile (6). Diese Sechseckseiten bilden damit jeweils eine Art Gelenkachse für die einzelnen Verschlussteile (6). Der genannte Kreisring, in dem die Durchtrittsöffnungen (2) angeordnet sind, verläuft im Querschnitt gesehen im Anschluss an den Zentralbereich zunächst noch horizontal, steigt anschließend an, bildet daran anschließend einen Kuppelring und fällt darauf hin wieder nach unten, wo er in den äußeren Bereich der Schalenform übergeht. Die Verschlussteile (6) haben im Wesentlichen die gleiche Gestalt wie die Durchtrittsöffnungen (2) bzw. der Kochgefäßaufsatz (1) im Bereich der Durchtrittsöffnungen (2) wobei diese jedoch leicht übergriffen werden und somit in der Ruhestellung auf den Verbindungsstegen (10) und dem radialen, äußeren Durchtrittsöffnungsrand aufliegen. Die einzelnen Verschlussteile (2) haben über den Verbindungsstegen (10) einen Abstand zueinander, womit ein störungsfreier Bewegungsablauf, der Durchtrittsöffnungen (2) gewährleistet ist. Das störungsfreie auf- und herabklappen der Verschlussteile (2) wird noch dadurch begünstigt, dass deren Dicke zu den freien Rändern hin abnimmt. Damit gleiten die Verschlussteile allenfalls übereinander und verspreizen sich nicht bei ihrer Klappbewegung.

In diesem Falle ist ein Bauteil gefertigt, das aus dem polygonaler Zentralbereich mit daran anschließenden, wie voran beschrieben geformten, blütenblätterähnlichen Verschlussteilen (6). Dieses Bauteil ist auf den polygonalen Zentralbereich des Kochgefäßaufsatzes aufgesetzt und mit diesem so verbunden, dass ein einstückiges Gesamtbauteil entsteht.

In Figuren sind die Verschlussteile (6) in der geöffneten Position gezeigt. Die Schnittführung des in Figur 1 und 3 zur besseren Darstellung herausgeschnittene Viertels ist so gewählt, dass der linke Viertelrand durch einen Verbindungssteg (10) geführt ist und der rechte Viertelrand zwischen zwei Verbindungsstegen (10) verläuft.

In der geöffneten Position haben sich die Verschlussteile (6) durch die nach oben aufkochende Flüssigkeit (3) entgegen ihres Öffnungsbewegungswiderstandes aufgestellt, wobei der Öffnungsbewegungswiderstand hauptsächlich aus der Eigengewichtskomponente und allenfalls geringfügig aus dem Verformungswiderstand des Verschlussteils (2) im Bereich der die Gelenkachse bildenden Verbindungslinie (9) resultiert.

Sofort beim Auftreffen der hochkochenden bzw. aufschäumenden Flüssigkeit (3) auf das Verschlussteil (2), klappt dieses nach oben und gibt der hochkochenden Flüssigkeit (3) den Weg in die Auffangschale frei. Dieser Kochvorgang kann sehr turbulent verlaufen, wobei das Verschlussteil (2) sensibel auf jeden unterschiedlichen Öffnungsdruck der Flüssigkeit so reagiert, dass der Öffnungsquerschnitt zwischen der Durchtrittsöffnung und der Schale gerade so weit wie nötig geöffnet wird. Damit ist wieder sichergestellt, dass keine unnötige Energie verbraucht wird und dass unter der wechselnden Hin- und Herbewegung des als Klappe wirkenden Verschlussteils (6) die Oberflächenspannung oder gar Hautbildung der hochgekochten Flüssigkeit vermindert wird.

Unterhalb der durch die Durchtrittsöffnungen (2) strömenden Flüssigkeit erfolgt ein Rückfluss der in der Schale abgekühlten Flüssigkeit. Ein Überkochen wird dabei auch bei anhaltendem Kochvorgang unterbunden.

Die grundsätzliche Öffnungsstellung der Verschlussteile (6) bleibt solange erhalten solange von der Kochstelle genügend Energie zugeführt wird. Wird die Energiezufuhr abgestellt, bewegen sich die Verschlussteile (6) wieder in ihre Ruhestellung. Wird die Energiezufuhr wieder erhöht, wird der Öffnungsvorgang wieder eingeleitet. Dieses Wechselspiel, könnte sich laufend wiederholen ohne dass ein Überkochen aus dem Kochgefäßaufsatz zu befürchten ist.

Bei dem Kochgefäßaufsatz (1) nach Fig. 3 ist die Schale aus einem Hartmaterial, beispielsweise Glas oder Aluminium hergestellt. Er könnte grundsätzlich, wie in Fig. 1 gezeigt, ebenso aus Silikon gebildet sein. Der Kochgefäßaufsatz (1) hat von seinem Zentrum bis zum Rand eine einfach herstellbare, gleichmäßige Schalenform.

Wie bei der Ausführung nach Fig. 1 sind auch bei diesem Ausführungsbeispiel sechs Durchtrittsöffnungen (2) gleichmäßig verteilt angeordnet. Sie haben im Wesentlichen einen tortenstückähnlichen Grundriss mit abgekanteter Spitze, sind unter Bildung von Verbindungsstegen (10) beabstandet zueinander und liegen zwischen einem Kreisring von weniger als 14 cm und einem Zentralbereich des Kochgefäßaufsatzes (1). Diesen Durchtrittsöffnungen ist ein dünnwandiges tellerartiges Verschlussteil (6) mit ebenfalls einem Zentralbereich und daran anschließenden Einzelverschlussteilen (6) zugeordnet, womit ein blütenähnliches Gebilde entsteht. Die Wandung des tellerartigen Verschlussteils (6) ist in seiner Ruhestellung der gleichmäßigen Schalenform angepasst und liegt auf der Schalenform auf. Der Zentralbereich des tellerartigen Verschlussteils (6) kann kleiner, gleich oder grösser als der Zentralbereich der Schale sein. Im dargestellten Beispiel sind beide Zentralbereiche gleich und kreisförmig ausgebildet, wobei dieser Kreis die Verbindungslinien (9) bildet. Beide Zentralbereiche sind vollflächig so miteinander verbunden dass der Kochgefäßaufsatz einstückig ist.

Alternativ wäre es auch möglich einen einfach gestalteten, kreisscheibenförmigen Verschlussteller vorzusehen, der im Grundriss die Durchtrittsöffnungen übergreift und dessen Kreisrand im Ruhezustand auf der Schalenform aufliegt und somit innerhalb dieser Auflagefläche beliebig gestaltet sein kann, wobei seine Öffnungsstellung dadurch erreicht wird, dass sich der Verschlusstellerrand von der Schalenform abhebt und dabei den Flüssigkeitsdurchfluss vorzugsweise für mehrere oder alle Durchtrittsöffnungen freigibt. Dieses Anheben kann entweder dadurch erreicht werden, dass der Tellerrand gegenüber durch die hochkochende Flüssigkeit nach oben gebogen wird. Dieses Anheben könnte alternativ dadurch erreicht werden, dass der Verschlussteller z.B. vertikalbeweglich mit dem Kochgefäßaufsatz verbunden ist und der gesamte Verschlussteller geführt angehoben wird. Um den Flüssigkeitsaustritt zwischen dem Kochgefäß (7) und dem Kochgefäßaufsatz (1) entlang der Kontaktflächen (11) zuverlässig zu verhindern sind bei dem Ausführungsbeispiel nach Fig. 3 an der Unterseite der Schalenform elastische Silikonringbereiche mit den Durchmessern vorgesehen, die den üblichen Kochgefäßdurchmessern entsprechen. Neben dem innersten Silikonringbereich sind an der Schalenunterseite noch Noppen vorgesehen, die ein zentrisches Platzieren des Kochgefäßaufsatzes auf dem Kochgefäß ermöglichen.

Der Kochvorgang, das Erreichen der Öffnungsbewegung des Verschlussteiles und sein Zurückbewegen in den Ruhezustand erfolgt analog den zu Fig. 1 und 2 beschriebenen Abläufen.

Wie bereits erwähnt, kann der Kochvorgang sehr turbulent ablaufen. Nicht nur in diesem Falle verhindert der Kochgefäßaufsatz auch ein zu starkes Spritzen und damit eine daraus resultierende Kochstellenverschmutzung. Natürlich kann der Kochgefäßaufsatz ohne weiteres auch als Abdeckung bzw. Deckel für nicht zum Überkochen neigendem Koch- oder Bratgut und/oder für jede Art von Koch- oder Bratgeschirr verwendet werden.

Sämtliche vorangehend und nachfolgend genannten Merkmale und die Merkmale sämtlicher Ausführungsformen können für sich genommen miteinander kombiniert werden.

Die folgenden Absätze sind Teil der Offenbarung.
1. Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der mindestens eine Durchtrittsöffnung (2) für die Flüssigkeit aufweist, wobei der Durchtrittsöffnung (2) bzw. den Durchtrittsöffnungen ein flächiges Verschlussteil (6) zugeordnet ist, das mit dem Kochgefäßaufsatz (1) verbunden ist, und das in dem nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind, und so gestaltet und mit dem Kochgefäßaufsatz (1) verbunden ist, dass es der Öffnungsbewegung einen geringen Widerstand entgegensetzt, wobei der Kochgefäßaufsatz (1) auf Kochgefäße mit unterschiedlichen Durchmessern aufsetzbar ist, zumindest die Kontaktflächen (11) des Kochgefäßaufsatzes (1) zu den unterschiedlichen Kochgefäßen (7) aus einem elastischen Material, insbesondere aus Silikon, gebildet sind, und das Verschlussteil (6) bevorzugt tellerartig ausgebildet ist, dadurch gekennzeichnet, dass
   der Kochgefäßaufsatz (1) schalenförmig ausgebildet ist, sodass die hochkochende Flüssigkeit durch die geöffnete Druchtrittsöffnung (2) bzw. durch die geöffneten Druchtrittsöffnungen (2) in die Schale gelangen kann und von dort durch die geöffnete Durchtrittsöffnung (2) bzw. die geöffneten Durchtrittsöffnungen (2) wieder in das Kochgefäß (7) zurücklaufen kann.
2. Kochgefäßaufsatz (1) nach 1, dadurch gekennzeichnet, dass das tellerartige Verschlussteil zentral mit dem Kochgefäßaufsatz (1) verbunden ist und bevorzugt in einzelne blütenblätterähnliche Einzelverschlussteile aufgefächert ist.
3. Kochgefäßaufsatz (1) nach 1 oder 2, dadurch gekennzeichnet, dass das Verschlussteil mit dem Kochgefäßaufsatz (1) so verbunden ist, dass es eine geführte, insbesondere vertikale, Bewegung zwischen der Öffnungsstellung und der Ruhestellung ausführen kann.
4. Kochgefäßaufsatz (1) nach einem der vorhergehenden, dadurch gekennzeichnet, dass das Verschlussteil als kreisscheibenförmiger Verschlussteller ausgestaltet ist, der im Grundriss die Durchtrittsöffnungen (2) übergreift, und dessen Kreisrand im Ruhezustand auf der Schalenform des Kochgefäßaufsatzes (1) aufliegt und dessen Öffnungsstellung durch Abheben des Verschlusstellerrandes von der Schalenform erreicht wird, wobei das Anheben des Verschlusstellerrandes bevorzugt durch Hochbiegen des Verschlusstellerrandes oder durch ein geführtes Anheben des gesamten Verschlusstellers, der beweglich, insbesondere vertikalbeweglich mit dem Kochgefäßaufsatz (1) verbunden ist, erfolgt.
5. Kochgefäßaufsatz (1) nach einem der vorhergehenden, dadurch gekennzeichnet, dass mehrere Durchtrittsöffnungen (2) in einem Kreisringbereich zwischen einem Zentralbereich und Außenringbereich des Kochgefäßaufsatzes (1) vorgesehen sind, und/oder das Verschlussteil bei abgestellter Energiezufuhr von einer Kochstelle in den Ruhezustand bewegbar ist.
6. Kochgefäßaufsatz (1) nach 5, dadurch gekennzeichnet, dass mehrere Durchtrittsöffnungen (2) im Grundriss gesehen zentralsymmetrisch angeordnet und im Wesentlichen kreissektorförmig ausgebildet sind, wobei deren zentrumsfernen Ecken an den Kreissegmenten und/oder deren zentrumsnahen Ecken abgerundet oder abgeschnitten sind, und dass zwischen den Radialseiten der Durchtrittsöffnungen (2) radiale Verbindungsstege (8) des Kochgefäßaufsatzes (1) angeordnet sind, die sich von dessen Zentralbereich zum zentrumsfernen Außenringbereich erstrecken.
7. Kochgefäßaufsatz (1) nach einem der 1 bis 4, dadurch gekennzeichnet, dass eine zentrale Durchtrittsöffnung (2) vorgesehen ist.
8. Kochgefäßaufsatz (1) nach einem der vorhergehenden, dadurch gekennzeichnet, dass zumindest die Berührungsränder des Verschlussteils (6) mit dem Kochgefäßaufsatz (1) der dortigen Formgebung des Kochgefäßaufsatzes (1) im Wesentlichen entsprechen und/oder das Verschlussteil (6) die Durchtrittsöffnung(en) (2) überlappt oder überdeckt.
9. Kochgefäßaufsatz (1) nach einem der vorhergehenden, dadurch gekennzeichnet, dass das Verschlussteil (2) zumindest bereichsweise aus einem elastischen Material, insbesondere Silikon, gebildet ist.
10. Kochgefäßaufsatz (1) nach einem der vorhergehenden, dadurch gekennzeichnet, dass das Verschlussteil (6) eine geringe Dicke und/oder ein geringes Gewicht aufweist.
11. Kochgefäßaufsatz (1) nach einem der vorhergehenden, dadurch gekennzeichnet, dass das Verschlussteil (6) mit Rippen und/oder Kerben versehen ist und/oder die Dicke des Verschlussteils (6) bevorzugt zu seinen freien, nicht mit dem Kochgefäßaufsatz (1) verbundenen Rändern hin abnimmt und/oder das Verschlussteil (6) eine Anlagefläche aufweist, die am Ende der Bewegung von der Öffnungsstellung in die Ruhestellung mit einer am Rand der Durchtrittsöffnung (2) ausgebildeten weiteren Anlagefläche, vorzugsweise einer in seine Bewegungsbahn hineinreichende Schrägfläche oder Anschlagnoppe, in Wirkverbindung gelangt und damit nur eine Öffnungsrichtung erlaubt.
12. Kochgefäßaufsatz (1) nach einem der vorhergehenden, dadurch gekennzeichnet, dass das Verschlussteil (6) in Art eines Membranventils ausgebildet ist, das vorzugsweise in seinem Zentralbereich mit dem Kochgefäßaufsatz (1) verbunden ist und mit einem daran anschließenden Ringbereich im Ruhezustand die Durchtrittsöffnung (2) bzw. Durchtrittsöffnungen im Wesentlichen verschließt und bevorzugt das membranventilartige Verschlussteil (6) als eigenes, mit dem restlichen Kochgefäßaufsatz (1) verbindbares Bauteil, gebildet ist.
13. Kochgefäßaufsatz (1) nach einem der vorhergehenden, dadurch gekennzeichnet, dass das Verschlussteil mit dem Kochgefäßaufsatz (1) zu einem einstückigen Gesamtbauteil verbunden ist, wobei das Verschlussteil und der Kochgefäßaufsatz (1) bevorzugt einen polygonalen Zentralbereich aufweisen.
14. Kochgefäßaufsatz (1) nach einem der vorhergehenden, dadurch gekennzeichnet, dass er im Querschnitt und von innen nach außen gesehen einen im Wesentlichen horizontal verlaufenden Zentralbereich, dann einen Ringabschnitt mit ansteigender Neigung, dann einen Kuppelabschnitt, dann einen nach unten abfallenden Ringabschnitt und dann wieder einen zweiten, nach oben ansteigenden Ringabschnitt bis zum Kochgefäßaufsatzrand aufweist, wobei die Durchtrittsöffnungen (2) vom inneren Zentralbereich bis zum äußeren Bereich des nach unten abfallenden Ringabschnittes oder bis zum inneren Bereich des zweiten ansteigenden Ringabschnittes reichen.
15. Kochgefäßaufsatz (1) nach einem der vorhergehenden, dadurch gekennzeichnet, dass er gänzlich aus Silikon gebildet ist und/oder mit Rippen und/oder Kerben und/oder Noppen (12) versehen ist und/oder Metalleinsätze oder -ringe, welche bevorzugt von Silikon umschlossen sind, und/oder Kunststoffeinsätze oder -ringe aufweist.
16. Kochgefäßaufsatz (1) nach einem der vorhergehenden, dadurch gekennzeichnet, dass jeder oder mehreren oder allen Durchtrittsöffnung(en) ein Verschlussteil zugeordnet ist, oder dass jeder Durchtrittsöffnung zwei benachbarte Öffnungsteile zugeordnet sind, wobei die Ränder der benachbarten Verschlussteile im Bereich der Durchtrittsöffnung beieinander liegen oder sich überlappen.
17. Kochgefäßaufsatz (1) nach einem der vorhergehenden, dadurch gekennzeichnet, dass zumindest die Berührungsränder des Verschlussteils bzw. der Verschlussteile mit dem Kochgefäßaufsatz der dortigen Formgebung des Kochgefäßaufsatzes im Wesentlichen entsprechen und/oder das Verschlussteil bzw. die Verschlussteile die zugeordneten Durchtrittsöffnungen überlappen oder überdecken.
18. Kochgefäßaufsatz (1) nach einem der vorhergehenden, dadurch gekennzeichnet, dass das bzw. die Verschlussteil(e) klappenartig zwischen der Ruhestellung und der Öffnungsstellung bewegbar sind.
19. Kochgefäßaufsatz (1) nach einem der vorhergehenden, dadurch gekennzeichnet, dass das Verschlussteil in Art eines Membranventils ausgebildet ist, das vorzugsweise in seinem Zentralbereich mit dem Kochgefäßaufsatz verbunden ist, und in einem daran anschließenden Ringbereich einzelne, jeweils an der Durchtrittsöffnung zugeordnete Einzelverschlussteile ausgebildet sind, die im Ruhezustand die jeweilige Durchtrittsöffnung im Wesentlichen verschließen.
20. Kochgefäßaufsatz (1) nach einem der vorhergehenden, dadurch gekennzeichnet, dass er gänzlich aus Silikon gebildet ist und/oder mit Rippen und/oder Kerben und/oder Noppen versehen ist.
   A1. Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der mindestens eine Durchtrittsöffnung (2) für die Flüssigkeit aufweist, wobei der Durchtrittsöffnung (2) bzw. den Durchtrittsöffnungen ein flächiges Verschlussteil (6) zugeordnet ist, das mit dem Kochgefäßaufsatz (1) verbunden ist, und das in dem nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind, und so gestaltet und mit dem Kochgefäßaufsatz (1) verbunden ist, dass es der Öffnungsbewegung einen geringen Widerstand entgegensetzt, wobei der Kochgefäßaufsatz (1) auf Kochgefäße mit unterschiedlichen Durchmessern aufsetzbar ist, zumindest die Kontaktflächen (11) des Kochgefäßaufsatzes (1) zu den unterschiedlichen Kochgefäßen (7) aus einem elastischen Material, insbesondere aus Silikon, gebildet sind,
      dadurch gekennzeichnet, dass
      der Kochgefäßaufsatz (1) schalenförmig ausgebildet ist, sodass die hochkochende Flüssigkeit durch die geöffnete Druchtrittsöffnung (2) bzw. durch die geöffneten Druchtrittsöffnungen (2) in die Schale gelangen kann und von dort durch die geöffnete Durchtrittsöffnung (2) bzw. die geöffneten Durchtrittsöffnungen (2) wieder in das Kochgefäß (7) zurücklaufen kann.
   A2. Kochgefäßaufsatz (1) nach A1, dadurch gekennzeichnet, dass das Verschlussteil mit dem Kochgefäßaufsatz (1) so verbunden ist, dass es eine geführte, insbesondere vertikale, Bewegung zwischen der Öffnungsstellung und der Ruhestellung ausführen kann.
   A3. Kochgefäßaufsatz (1) nach einem der A1 bis A2, dadurch gekennzeichnet, dass mehrere Durchtrittsöffnungen (2) in einem Kreisringbereich zwischen einem Zentralbereich und Außenringbereich des Kochgefäßaufsatzes (1) vorgesehen sind, und/oder das Verschlussteil bei abgestellter Energiezufuhr von einer Kochstelle in den Ruhezustand bewegbar ist.
   A4. Kochgefäßaufsatz (1) nach A3, dadurch gekennzeichnet, dass mehrere Durchtrittsöffnungen (2) im Grundriss gesehen zentralsymmetrisch angeordnet und im Wesentlichen kreissektorförmig ausgebildet sind, wobei deren zentrumsfernen Ecken an den Kreissegmenten und/oder deren zentrumsnahen Ecken abgerundet oder abgeschnitten sind, und dass zwischen den Radialseiten der Durchtrittsöffnungen (2) radiale Verbindungsstege (8) des Kochgefäßaufsatzes (1) angeordnet sind, die sich von dessen Zentralbereich zum zentrumsfernen Außenringbereich erstrecken.
   A5. Kochgefäßaufsatz (1) nach einem der A1 bis A4, dadurch gekennzeichnet, dass das Verschlussteil (6) in Art eines Membranventils ausgebildet ist, das vorzugsweise in seinem Zentralbereich mit dem Kochgefäßaufsatz (1) verbunden ist und in einem daran anschließenden Ringbereich einzelne, jeweils an der Durchtrittsöffnung (2) zugeordnete Einzelverschlussteile ausgebildet sind, die im Ruhezustand die jeweilige Durchtrittsöffnung (2) im Wesentlichen verschließen.
   A6. Kochgefäßaufsatz (1) nach einem der A1 bis A5, dadurch gekennzeichnet, dass er im Querschnitt und von innen nach außen gesehen einen im Wesentlichen horizontal verlaufenden Zentralbereich, dann einen Ringabschnitt mit ansteigender Neigung, dann einen Kuppelabschnitt, dann einen nach unten abfallenden Ringabschnitt und dann wieder einen zweiten, nach oben ansteigenden Ringabschnitt bis zum Kochgefäßaufsatzrand aufweist, wobei die Durchtrittsöffnungen (2) vom inneren Zentralbereich bis zum äußeren Bereich des nach unten abfallenden Ringabschnittes oder bis zum inneren Bereich des zweiten ansteigenden Ringabschnittes reichen.
   A7. Kochgefäßaufsatz (1) nach einem der A1 bis A6, dadurch gekennzeichnet, dass an den Kontaktflächen des Kochgefäßaufsatzes zu einem Kochgefäß in den Ringbereichen von 14 cm, 16 cm, 18 cm, 20 cm, 22 cm und/oder 24 cm ein elastisches Material, insbesondere Silikon vorgesehen ist.
   A8. Kochgefäßaufsatz (1) nach einem der A1 bis A7, dadurch gekennzeichnet, dass jeder Durchtrittsöffnung (2) ein Verschlussteil (6) zugeordnet ist.
   A9. Kochgefäßaufsatz (1) nach einem der A1 bis A8, dadurch gekennzeichnet, dass ein Verschlussteller vorgesehen ist, der neben der Durchtrittsöffnung an dem Kochgefäßaufsatz an zwei gegenüberliegenden Punkten befestigt und mit beiden Hälften nach oben klappbar ist.
   A10. Kochgefäßaufsatz (1) nach einem der A1 bis A9, dadurch gekennzeichnet, dass die Verschlussteile so mit dem Kochgefäßaufsatz verbunden sind, dass sie sich radial nach außen oder innen, oder tangential oder zu jeder beliebigen Zwischenrichtung hin öffnen.
   A11. Kochgefäßaufsatz (1) nach einem der A1 bis A10, dadurch gekennzeichnet, dass dieser Metalleinsätze oder -ringe, die bevorzugt von Silikon umschlossen sind, und/oder härtere oder harte Kunststoffeinsätze oder-ringe aufweist.
   A12. Kochgefäßaufsatz (1) nach einem der A1 bisA11, in Kombination mit einem Adapterring für Kochgefäße mit sehr großem Innendurchmesser, beispielsweise 28 cm oder mehr.
   A13. Kochgefäßaufsatz (1) nach einem der A1 bis A12, dadurch gekennzeichnet, dass das Verschlussteil (2) zumindest bereichsweise aus einem elastischen Material, insbesondere Silikon, gebildet ist.
   A14. Kochgefäßaufsatz (1) nach einem der A1 bis A13, dadurch gekennzeichnet, dass das Verschlussteil mit dem Kochgefäßaufsatz (1) zu einem einstückigen Gesamtbauteil verbunden ist, wobei das Verschlussteil und der Kochgefäßaufsatz (1) bevorzugt einen polygonalen Zentralbereich aufweisen.

## Patentansprüche

1. Kochgefäßaufsatz (1) zum Verhüten des Überkochens von Flüssigkeiten, insbesondere von beim Kochen aufschäumenden Flüssigkeiten mit hohem Eiweiß- oder Stärkeanteil wie Milch, Kochwasser von Kartoffeln oder Nudeln od. dgl., der mindestens eine Durchtrittsöffnung (2) für die Flüssigkeit aufweist, wobei der Durchtrittsöffnung (2) bzw. den Durchtrittsöffnungen ein flächiges Verschlussteil (6) zugeordnet ist, das mit dem Kochgefäßaufsatz (1) verbunden ist, und das in dem nicht durch die hochkochende bzw. hochschäumende Flüssigkeit in Kontakt stehenden Ruhezustand die ihm zugeordnete Durchtrittsöffnung (2) bzw. die ihm zugeordneten Durchtrittsöffnungen (2) im Wesentlichen verschließt und durch die Beaufschlagung mit der beim Kontakt mit der hochkochenden bzw. hochschäumenden Flüssigkeit (3) entstehenden Öffnungskraft in eine Öffnungsstellung bewegbar ist, in der die Durchtrittsöffnung (2) bzw. Durchtrittsöffnungen (2) zumindest teilweise freigegeben sind, und so gestaltet und mit dem Kochgefäßaufsatz (1) verbunden ist, dass es der Öffnungsbewegung einen geringen Widerstand entgegensetzt, wobei der Kochgefäßaufsatz (1) auf Kochgefäße mit unterschiedlichen Durchmessern aufsetzbar ist, zumindest die Kontaktflächen (11) des Kochgefäßaufsatzes (1) zu den unterschiedlichen Kochgefäßen (7) aus einem elastischen Material, insbesondere aus Silikon, gebildet sind,
**dadurch gekennzeichnet, dass**
der Kochgefäßaufsatz (1) schalenförmig ausgebildet ist, sodass die hochkochende Flüssigkeit durch die geöffnete Druchtrittsöffnung (2) bzw. durch die geöffneten Druchtrittsöffnungen (2) in die Schale gelangen kann und von dort durch die geöffnete Durchtrittsöffnung (2) bzw. die geöffneten Durchtrittsöffnungen (2) wieder in das Kochgefäß (7) zurücklaufen kann.

2. Kochgefäßaufsatz (1) nach Anspruch 1, **dadurch gekennzeichnet, dass** das Verschlussteil (6) tellerartig ausgebildet ist.

3. Kochgefäßaufsatz (1) nach einem der vorhergehenden Ansprüche, **dadurch gekennzeichnet, dass** das Verschlussteil flächig ausgeführt und mit dem Kochgefäßaufsatz (1) so verbunden ist, dass es eine geführte, insbesondere vertikale, Bewegung zwischen der Öffnungsstellung und der Ruhestellung ausführen kann, oder dass ein Verschlusstellerrand von der Schalenform abhebbar, insbesondere nach oben biegbar ist.

4. Kochgefäßaufsatz (1) nach einem der vorhergehenden Ansprüche, **dadurch gekennzeichnet, dass** mehrere Durchtrittsöffnungen (2) in einem Kreisringbereich zwischen einem Zentralbereich und Außenringbereich des Kochgefäßaufsatzes (1) vorgesehen sind, und/oder das Verschlussteil bei abgestellter Energiezufuhr von einer Kochstelle in den Ruhezustand bewegbar ist.

5. Kochgefäßaufsatz (1) nach Anspruch 4, **dadurch gekennzeichnet, dass** mehrere Durchtrittsöffnungen (2) im Grundriss gesehen zentralsymmetrisch angeordnet und im Wesentlichen kreissektorförmig ausgebildet sind, wobei deren zentrumsfernen Ecken an den Kreissegmenten und/oder deren zentrumsnahen Ecken abgerundet oder abgeschnitten sind, und dass zwischen den Radialseiten der Durchtrittsöffnungen (2) radiale Verbindungsstege (8) des Kochgefäßaufsatzes (1) angeordnet sind, die sich von dessen Zentralbereich zum zentrumsfernen Außenringbereich erstrecken.

6. Kochgefäßaufsatz (1) nach einem der vorangehenden Ansprüche, **dadurch gekennzeichnet, dass** das Verschlussteil (6) in Art eines Membranventils ausgebildet ist, das vorzugsweise in seinem Zentralbereich mit dem Kochgefäßaufsatz (1) verbunden ist und in einem daran anschließenden Ringbereich einzelne, jeweils an der Durchtrittsöffnung (2) zugeordnete Einzelverschlussteile ausgebildet sind, die im Ruhezustand die jeweilige Durchtrittsöffnung (2) im Wesentlichen verschließen.

7. Kochgefäßaufsatz (1) nach einem der vorhergehenden Ansprüche, **dadurch gekennzeichnet, dass** er im Querschnitt und von innen nach außen gesehen einen im Wesentlichen horizontal verlaufenden Zentralbereich, dann einen Ringabschnitt mit ansteigender Neigung, dann einen Kuppelabschnitt, dann einen nach unten abfallenden Ringabschnitt und dann wieder einen zweiten, nach oben ansteigenden Ringabschnitt bis zum Kochgefäßaufsatzrand aufweist, wobei die Durchtrittsöffnungen (2) vom inneren Zentralbereich bis zum äußeren Bereich des nach unten abfallenden Ringabschnittes oder bis zum inneren Bereich des zweiten ansteigenden Ringabschnittes reichen.

8. Kochgefäßaufsatz (1) nach einem der vorhergehenden Ansprüche, **dadurch gekennzeichnet, dass** an den Kontaktflächen des Kochgefäßaufsatzes zu einem Kochgefäß in den Ringbereichen von 14 cm, 16 cm, 18 cm, 20 cm, 22 cm und/oder 24 cm ein elastisches Material, insbesondere Silikon vorgesehen ist.

9. Kochgefäßaufsatz (1) nach einem der vorhergehenden Ansprüche, **dadurch gekennzeichnet, dass** jeder Durchtrittsöffnung (2) ein Verschlussteil (6) zugeordnet ist.

10. Kochgefäßaufsatz (1) nach einem der vorhergehenden Ansprüche, **dadurch gekennzeichnet, dass** ein Verschlussteller vorgesehen ist, der neben der Durchtrittsöffnung an dem Kochgefäßaufsatz an zwei gegenüberliegenden Punkten befestigt und mit beiden Hälften nach oben klappbar ist.

11. Kochgefäßaufsatz (1) nach einem der vorhergehenden Ansprüche, **dadurch gekennzeichnet, dass** die Verschlussteile so mit dem Kochgefäßaufsatz verbunden sind, dass sie sich radial nach außen oder innen, oder tangential oder zu jeder beliebigen Zwischenrichtung hin öffnen.

12. Kochgefäßaufsatz (1) nach einem der vorhergehenden Ansprüche, **dadurch gekennzeichnet, dass** dieser Metalleinsätze oder -ringe, die bevorzugt von Silikon umschlossen sind, und/oder härtere oder harte Kunststoffeinsätze oder -ringe aufweist.

13. Kochgefäßaufsatz (1) nach einem der vorhergehenden Ansprüche, in Kombination mit einem Adapterring für Kochgefäße mit sehr großem Innendurchmesser, beispielsweise 28 cm oder mehr.

14. Kochgefäßaufsatz (1) nach einem der vorhergehenden Ansprüche, **dadurch gekennzeichnet, dass** das Verschlussteil (2) zumindest bereichsweise aus einem elastischen Material, insbesondere Silikon, gebildet ist.

15. Kochgefäßaufsatz (1) nach einem der vorhergehenden Ansprüche, **dadurch gekennzeichnet, dass** das Verschlussteil mit dem Kochgefäßaufsatz (1) zu einem einstückigen Gesamtbauteil verbunden ist, wobei das Verschlussteil und der Kochgefäßaufsatz (1) bevorzugt einen polygonalen Zentralbereich aufweisen.
